# EUROPÄISCHE PATENTANMELDUNG

(11) **EP 2 463 703 A1**
(43) Veröffentlichungstag der Anmeldung: **13.06.2012**
(21) Anmeldenummer: 11193065.7
(22) Anmeldetag: 12.12.2011
(51) Int. Cl.: G02B 21/24, G02B 21/26, G02B 21/16, G02B 21/36

(54) **Mikroskoptisch mit verschwenkbarer Objektivhalterung**

(30) Priorität: 10.12.2010 DE 102010061170
(71) Anmelder: Leica Microsystems CMS GmbH, 35578 Wetzlar (DE)
(72) Erfinder: Seifert, Roland, 69115 Heidelberg (DE)
(74) Vertreter: Schaumburg, Thoenes, Thurn, Landskron, Eckert

(57) **Zusammenfassung**

Beschrieben ist ein Mikroskoptisch (14) mit einer Tischplatte (16) und einer Halterung (42) für ein Mikroskopobjektiv (38), die an der Tischplatte (14) um eine Lagerachse (46) schwenkbar und längs der Lagerachse (46) verschiebbar gelagert ist und das Objektiv (38) hält, ein mit der Halterung (42) gekoppeltes Bedienelement (50), mit dem die Halterung (42) zu ihrer Positionierung in einer Betriebsstellung um die Lagerachse (46) verschwenkbar und längs der Lagerachse (46) verschiebbar ist, und einen durch das Bedienelement (50) betätigbaren Feststellmechanismus (60), mit dem die in der Betriebsstellung positionierte Halterung (42) an der Tischplatte (16) festsetzbar ist.

## Beschreibung

### Die Erfindung betrifft einen Mikroskoptisch mit einer Tischplatte und einer verschwenkbaren Objektivhalterung

In jüngerer Vergangenheit wurden lichtmikroskopische Verfahren entwickelt, mit denen sich basierend auf einer sequentiellen, stochastischen Lokalisierung von einzelnen Punktobjekten, insbesondere Fluoreszenzmolekülen, Bildstrukturen darstellen lassen, die kleiner sind als die beugungsbedingte Auflösungsgrenze klassischer Lichtmikroskope. Solche Verfahren sind beispielsweise beschrieben in WO 2006/127692 A2; DE 10 2006 021 317 B3; WO 2007/128434 A1, US 2009/0134342 A1; DE 10 2008 024 568 A1; "Subdiffraction-limit imaging by stochastic optical reconstruction microscopy (STORM)", Nature Methods 3, 793-796 (2006), M. J. Rust, M. Bates, X. Zhuang; "Resolution of Lambda/10 in fluorescence microscopy using fast single molecule photo-switching", Geisler C. et al, Appl. Phys. A, 88, 223-226 (2007). Dieser neue Zweig der Mikroskopie wird auch als Lokalisierungsmikroskopie bezeichnet. Die angewandten Verfahren sind in der Literatur z.B. unter den Bezeichnungen (F)PALM ((Fluorescence) Photoactivation Localization Microscopy), PALMIRA (PALM with Independently Running Acquisition), GSD(IM) (Ground State Depletion (Individual Molecule return) Microscopy) oder (F)STORM ((Fluorescence) Stochastic Optical Reconstruction Microscopy) bekannt.

Den neuen Verfahren ist gemein, dass die abzubildenden Strukturen mit Markern präpariert werden, die über zwei unterscheidbare Zustände verfügen, nämlich einen "hellen" Zustand und einen "dunklen" Zustand. Werden beispielsweise Fluoreszenzfarbstoffe als Marker verwendet, so ist der helle Zustand ein fluoreszenzfähiger Zustand und der dunkle Zustand ein nicht fluoreszenzfähiger Zustand. Zur Abbildung von Bildstrukturen mit einer Auflösung, die kleiner als die klassische Auflösungsgrenze des abbildenden optischen Systems ist, wird nun wiederholt eine kleine Untermenge der Marker in den hellen Zustand überführt und damit gleichsam aktiviert. Diese aktivierte Untermenge ist dabei so zu wählen, dass der mittlere Abstand benachbarter Marker im hellen Zustand größer ist als die Auflösungsgrenze des abbildenden optischen Systems. Die Luminanzsignale der aktivierten Untermenge werden auf einen räumlich auflösenden Lichtdetektor, z.B. eine CCD-Kamera, abgebildet. Von jedem Marker wird so ein Lichtfleck erfasst, dessen Größe durch die Auflösungsgrenze des abbildenden optischen Systems bestimmt ist.

Auf diese Weise wird eine Vielzahl von Rohdaten-Einzelbildern aufgenommen, in denen jeweils eine andere aktivierte Untermenge abgebildet ist. In einem Bildanalyse-Prozess werden dann in jedem Rohdaten-Einzelbild die Schwerpunkte der Lichtflecke bestimmt, die die im hellen Zustand befindlichen Marker darstellen. Die aus den Rohdaten-Einzelbildern ermittelten Schwerpunkte der Lichtflecke werden dann in einer Gesamtdarstellung zusammengetragen. Das durch diese Gesamtdarstellung entstehende hochaufgelöste Bild spiegelt die Verteilung der Marker wider. Für eine repräsentative Wiedergabe der abzubildenden Struktur müssen ausreichend viele Signale detektiert werden. Da jedoch die Anzahl an Markern in der jeweils aktivierten Untermenge durch den minimalen mittleren Abstand, den zwei Marker im hellen Zustand voneinander haben dürfen, limitiert ist, müssen sehr viele Rohdaten-Einzelbilder aufgenommen werden, um die Struktur vollständig abzubilden. Typischerweise liegt die Anzahl an Rohdaten-Einzelbildern in einem Bereich von 10.000 bis 100.000.

Die für die Aufnahme eines Rohdaten-Einzelbildes benötigte Zeit ist nach unten hin durch die maximale Bildaufnahmerate des abbildenden Detektors limitiert. Dies führt zu vergleichsweise langen Gesamtaufnahmezeiten für eine für die Gesamtdarstellung benötigte Serie von Rohdaten-Einzelbildern. So kann die Gesamtaufnahmezeit bis zu einigen Stunden betragen.

Über diese lange Gesamtaufnahmezeit kann es nun zu einer Bewegung der abzubildenden Probe relativ zum bildgebenden optischen System kommen. Da für die Erstellung eines hochaufgelösten Gesamtbildes alle Rohdaten-Einzelbilder nach der Schwerpunktbestimmung zusammengeführt werden, verschlechtert jede Relativbewegung zwischen Probe und bildgebendem optischen System, die während der Aufnahme zweier aufeinanderfolgender Rohdaten-Einzelbilder auftritt, die Ortsauflösung des Gesamtbildes. In vielen Fällen rührt diese Relativbewegung von einer systematischen mechanischen Bewegung des Systems her, auch als mechanische Drift bezeichnet, die beispielsweise durch thermische Ausdehnung oder Schrumpfung, durch mechanische Verspannungen oder durch die Veränderung der Konsistenz von Schmiermitteln, die in den mechanischen Komponenten verwendet werden, verursacht wird.

In den vorstehend beschriebenen hochauflösenden Verfahren ist es von besonderer Bedeutung, für eine driftfreie Positionierung des das abbildende System bildenden Objektivs relativ zu der auf der Tischplatte angeordneten Probe zu sorgen. Dies kann dadurch erreicht werden, dass das Objektiv nicht wie üblich an einem Objektivrevolver, sondern direkt an der Tischplatte montiert wird. Bei einer solchen Ausgestaltung ist das Objektiv an der der Probe abgewandten Unterseite der Tischplatte im Bereich einer in der Tischplatte ausgebildeten Durchgangsöffnung angeordnet und bildet die Probe, die auf einem auf der oberen Seite der Tischplatte aufliegenden Probenträger angeordnet ist, durch die Durchgangsöffnung hindurch ab. In Folge der direkten Anbringung des Objektivs an der Tischplatte ist die Strecke, über die das Objektiv mit dem Probenträger mechanisch gekoppelt ist, vergleichsweise kurz, wodurch eine zwischen dem Objektiv und dem Probenträger auftretende mechanische Drift weitgehend vermieden werden kann.

Eine Ausgestaltung, bei der das Objektiv fest an dem Mikroskoptisch angebracht ist, hat jedoch gegenüber der üblichen Verwendung eines Objektivrevolvers Nachteile, was die flexible Handhabung des Mikroskops betrifft. So ist es mit einem Objektivrevolver beispielsweise möglich, durch Einschwenken eines über eine geeignete Vergrößerung verfügenden Objektivs in den Abbildungsstrahlengang zunächst übersichtshalber einen vergleichsweise großen Probenausschnitt zu betrachten und darin einen geeigneten Zielbereich auszuwählen, der dann mittels eines anderen Objektivs höherer Vergrößerung abgebildet wird. Eine solch flexible Handhabung ist insbesondere auch in den vorstehend beschriebenen hochauflösenden Mikroskopieverfahren wünschenswert.

Der Erfindung liegt deshalb die Aufgabe zu Grunde, einen in der hochauflösenden Lichtmikroskopie, insbesondere der
Lokalisierungsmikroskopie verwendbaren Mikroskoptisch anzugeben, der eine präzise und driftfreie Positionierung eines Objektivs bezüglich einer auf dem Mikroskoptisch angeordneten Probe ermöglicht und zugleich die Verwendung mehrerer Objektive für verschiedene Auflösungen erlaubt.

Die Erfindung löst diese Aufgabe durch eine Halterung, die an der Mikroskoptischplatte um eine zu einer optischen Achse im wesentlichen parallelen Lagerachse schwenkbar und längs der Lagerachse verschiebbar gelagert ist und die das Objektiv hält, durch ein mit der Halterung gekoppeltes Bedienelement, mit dem die Halterung zur Positionierung in eine Betriebsstellung um die Lagerachse verschwenkbar und längs der Lagerachse verschiebbar ist, und durch einen mittels des Bedienelementes betätigbaren Feststellmechanismus, mit dem die in der Betriebsstellung positionierte Halterung an der Tischplatte festsetzbar ist.

Die Erfindung sieht also eine Halterung für das Objektiv vor, die mittels eines von dem Benutzer zu betätigenden Bedienelementes in eine Betriebsstellung, in der die Halterung und damit das Objektiv direkt an der Tischplatte angeordnet sind, bewegt und dort durch einen Feststellmechanismus, der ebenfalls mittels des Bedienelementes betätigt wird, festgesetzt wird. Dieses Festsetzen der Halterung an der Tischplatte sorgt für eine driftfreie Positionierung des Objektivs gegenüber der auf der Tischplatte aufliegenden Probe.

Das Objektiv kann über einen Fokussierantrieb, z.B. einen piezokeramischen Aktor, an der Halterung befestigt sein. Hierdurch wird erreicht, dass auch die in jedem Fall erforderliche Fokussierung des Objektivs weitgehend driftfrei ist.

In ihrer Betriebsstellung wird die das Objektiv tragende Halterung in der Regel an der Unterseite der Tischplatte im Bereich einer in der Tischplatte ausgebildeten Durchgangsöffnung angeordnet sein. Das an der Halterung angebrachte Objektiv bildet dann durch diese Durchgangsöffnung hindurch die Probe ab, die auf einem Probenträger angebracht ist, der auf der Oberseite der Tischplatte aufliegt und die Durchgangsöffnung bedeckt.

Der erfindungsgemäße Mikroskoptisch kann auf ein herkömmliches Mikroskopstativ montiert werden, der einen Objektivrevolver mit mehreren Mikroskopobjektiven enthält. Ist die Halterung aus ihrer Betriebsstellung herausgeschwenkt, so ist im Bereich der in der Tischplatte ausgebildeten Durchgangsöffnung genügend Raum, um eines der an dem Objektivrevolver gehaltenen Mikroskopbjektive in den Abbildungsstrahlengang einzuschwenken.

Ist das Mikroskop sowohl mit dem erfindungsgemäßen Mikroskoptisch als auch einem herkömmlichen Objektivrevolver ausgestattet, so kann beispielsweise ein Sensor vorgesehen werden, der erfasst, wenn die das Objektiv tragende Halterung in ihre Betriebsstellung geschwenkt ist. Ein entsprechendes von dem Sensor ausgegebenes Sensorsignal kann dann genutzt werden, den Objektivrevolver unterhalb der Tischplatte in eine Stellung zu bringen, in der sichergestellt ist, dass die an dem Objektivrevolver gehaltenen Mikroskopobjektive nicht an die in ihrer Betriebsstellung angeordnete Halterung anstoßen. Hierzu ist es beispielsweise denkbar, den Objektivrevolver nicht vollständig mit Mikroskopobjektiven zu bestücken, so dass in einer bestimmten Stellung des Objektivrevolvers unterhalb der Tischplatte genügend Raum für die Halterung zur Verfügung steht.

Die Halterung ist sowohl um die Lagerachse schwenkbar als auch längs der Lagerachse verschiebbar gelagert. Durch diese verschiebbare Lagerung kann das an der Halterung angebrachte Objektiv in Richtung der optischen Achse von der Probe entfernt werden, bevor es aus dem Abbildungsstrahlengang herausgeschwenkt wird. Das Objektiv in dieser Weise von der Probe zu entfernen, ist in lichtmikroskopischen Verfahren von Vorteil, bei denen zwischen dem Objektiv und der Probe eine Immersionsflüssigkeit vorhanden ist, um die erzielbare Auflösung zu steigern. Das Verschieben der Halterung längs der Lagerachse ermöglicht es in diesem Fall, das Objektiv sanft von der Emulsionsflüssigkeit zu trennen bzw. in diese einzutauchen.

Vorzugsweise ist das Bedienelement als Hebel ausgebildet, der zum Verschwenken der Halterung um die Lagerachse in einer ersten Ebene innerhalb eines ersten Schwenkbereichs und zum Verschieben der Halterung längs der Lagerachse in einer zu der ersten Ebene senkrechten zweiten Ebene innerhalb eines zweiten Schwenkbereichs verschwenkbar ist. Mit einem solchen, in zwei zueinander senkrechten Ebenen verschwenkbaren Hebel lässt sich die Halterung einfach und präzise in ihre Betriebsstellung bewegen und aus dieser entfernen.

In einer bevorzugten Ausgestaltung weist der Feststellmechanismus eine an der Tischplatte angebrachte Aufnahme und ein mit dem Hebel über eine Gelenkkette gekoppeltes Verriegelungselement auf, das durch Verschwenken des Hebels innerhalb des ersten Schwenkbereichs in die Aufnahme einschwenkbar und zum Festsetzen der Halterung an der Tischplatte durch Verschwenken des Hebels über den zweiten Schwenkbereich hinaus in der Aufnahme festziehbar ist. In dieser Ausgestaltung ist also ein über den zweiten Schwenkbereich hinausgehender Bereich für die Verschwenkung des Hebels in der zweiten Ebene vorgesehen. Während der zweite Schwenkbereich dazu dient, die Halterung längs der Lagerachse in ihre Betriebsstellung zu bewegen (z.B. in Anlage mit der Unterseite der Tischplatte zu bringen), dient dieser zusätzliche Bereich dazu, die schon in der Betriebsstellung angeordnete Halterung driftfest zu arretieren.

In einer weiteren vorteilhaften Weiterbildung weist die Gelenkkette ein mit dem Verriegelungselement gekoppeltes, bistabiles Gelenkglied auf, das in der Gelenkkette aus einer ersten stabilen Lage in eine zweite stabile Lage wechselt, wenn der Hebel aus dem zweiten Schwenkbereich über diesen hinaus verschwenkt wird. In diesem Fall ist das Verriegelungselement über die Gelenkkette aus der Aufnahme gelöst, wenn sich das bistabile Gelenkglied in der ersten stabilen Lage befindet, während es über die Gelenkkette in der Aufnahme festgezogen ist, wenn sich das bistabile Gelenkglied in der zweiten stabilen Lage befindet. Der Wechsel zwischen der ersten stabilen Lage und der zweiten stabilen Lage des vorstehend genannten Gelenkgliedes wird dadurch ausgelöst, dass der Hebel über den zweiten Schwenkbereichs hinaus verschwenkt wird. Der Benutzer kann also mit einer einzigen Betätigung des Hebels die Halterung zunächst in ihre Betriebsstellung bringen und dann in dieser Betriebsstellung an der Tischplatte arretieren. Dies gestaltet die Handhabung des erfindungsgemäßen Mikroskoptisches besonders einfach.

Vorzugsweise setzt die Gelenkkette dem Hebel beim Wechsel des bistabilen Gelenkgliedes zwischen der ersten stabilen Lage und der zweiten stabilen Lage einen erhöhten Betätigungswiderstand entgegen. Diesen Betätigungswiderstand nimmt der Benutzer wahr, wenn er den Hebel zunächst soweit betätigt, bis die Halterung längs der Lagerachse in ihre Betriebsstellung gebracht ist und dann anschließend den Hebel mit erhöhter Kraft gleichsam über einen Knickpunkt hinweg betätigt, um die Halterung an der Tischplatte festzuspannen. Nach Überwinden dieses Knickpunkts nimmt der Betätigungswiderstand wieder ab. Die Halterung ist so gleichsam selbsthemmend an der Tischplatte verspannt. Diese Verspannung kann nur mit Hebel wieder gelöst werden. Durch die wahrnehmbare Änderung des Betätigungswiderstands kann der Benutzer präzise erfassen, wann die Halterung tatsächlich an der Tischplatte arretiert ist.

Vorzugsweise ist das Verriegelungselement ein Stift mit einem aufgeweiteten Stiftkopf, während die Aufnahme eine in die Tischplatte integrierte Klemmplatte ist, die eine Anlagefläche für den Stiftkopf und eine zu einer Seite hin offene Aussparung aufweist, in die der Stift einschwenkbar ist. Der Stiftkopf ist dann zum Festsetzen der Halterung an der Tischplatte an der Anlagefläche festziehbar.

Bei dieser Ausgestaltung kann der Stift als Schraube und eines der Gelenkglieder, aus denen die Gelenkkette zusammengesetzt ist, als Gewindehülse ausgebildet sein, in welche die Schraube eingeschraubt ist. Dies ermöglicht einen besonders kompakten Aufbau des durch den Hebel auslösbaren Feststellmechanismus.

Vorzugsweise ist die Kraft, mit der die Halterung an der Tischplatte festziehbar ist, durch Verändern der Einschraubtiefe, mit der die Schraube in die Gewindehülse geschraubt ist, einstellbar. In dieser Ausführung lässt sich also mit der Einschraubtiefe der Hub verändern, über den die Schraube an der Tischplatte festgezogen wird.

In einer weiteren vorteilhaften Ausgestaltung weist der Mikroskoptisch eine im Wesentlichen parallel zu der ersten Ebene angeordnete Druckfeder auf, deren eines Ende drehbar an der Halterung und deren anderes Ende drehbar an der Tischplatte gelagert ist. Die Druckfeder wird beim Verschwenken des Hebels aus einer Hebelendposition in die andere Hebelendposition des ersten Schwenkbereichs zunächst entgegen ihrer Federkraft zusammengedrückt und entspannt sich dann etwa in der Mitte des ersten Schwenkbereichs in Folge ihrer Federkraft wieder. Dadurch ist der Hebel in Richtung seiner beiden Hebelendpositionen vorgespannt. Die Druckfeder erleichtert es dem Benutzer, die Halterung und damit das Objektiv definiert in den Abbildungsstrahlengang einzuschwenken und aus diesem auszuschwenken. Dies macht die Handhabung des Mikroskoptisches besonders einfach.

Nach einem weiteren Aspekt der Erfindung ist ein Mikroskop mit einem Mikroskoptisch vorstehend beschriebener Art und einem Objektivrevolver zum wahlweisen Einschwenken eines von mehreren an dem Objektivrevolver gehaltenen Mikroskopobjektiven vorgesehen.

Die Erfindung wird im Folgenden an Hand eines Ausführungsbeispiels unter Bezugnahme auf die Figuren näher erläutert.

### Darin zeigen:

- Figur 1: eine perspektivische Ansicht eines hochauflösenden Lichtmikroskops als Ausführungsbeispiel;
- Figur 2: eine perspektivische Unteransicht des Mikroskoptisches des Lichtmikroskops nach Figur 1;

- Figuren 3 bis 7: aufgebrochene, perspektivische Ansichten des Mikroskoptisches zur Erläuterung, wie eine Halterung in eine Betriebsstellung verschwenkt und an der Tischplatte festgesetzt wird;
- Figuren 8 bis 11: Seitenansichten eines Hebels und eines durch den Hebel betätigten Feststellmechanismus zur Erläuterung, wie die Halterung durch Schwenken des Hebels an der Tischplatte festgesetzt wird;
- Figur 12: eine Seitenansicht, in der die in den Figuren 8 und 11 gezeigten Zustände einander überlagert dargestellt sind;
- Figur 13: eine Unteransicht auf die Halterung im ausgeschwenkten Zustand;
- Figur 14: eine Unteransicht auf die Halterung im eingeschwenkten Zustand;

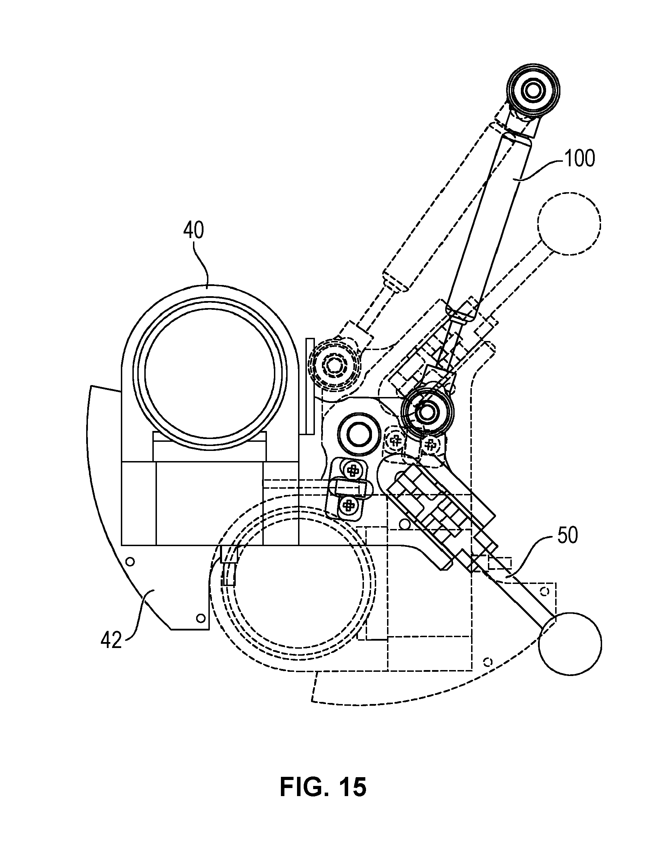

- Figur 15: eine Ansicht, in der die Zustände nach den Figuren 13 und 14 einander überlagert dargestellt sind;
- Figur 16: eine weitere Seitenansicht des Hebels und des durch den Hebel betätigten Feststellmechanismus, in der die einzelnen Komponenten des Hebels und des Feststellmechanismus vergrößert dargestellt sind; und
- Figur 17: eine schematische Darstellung einer alternativen Lagerung der Halterung.

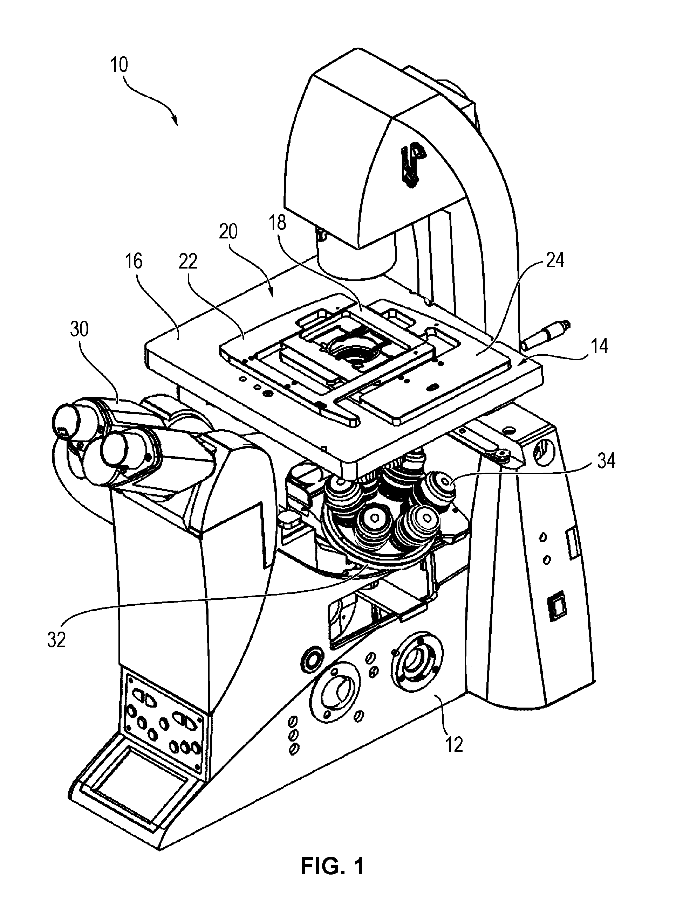

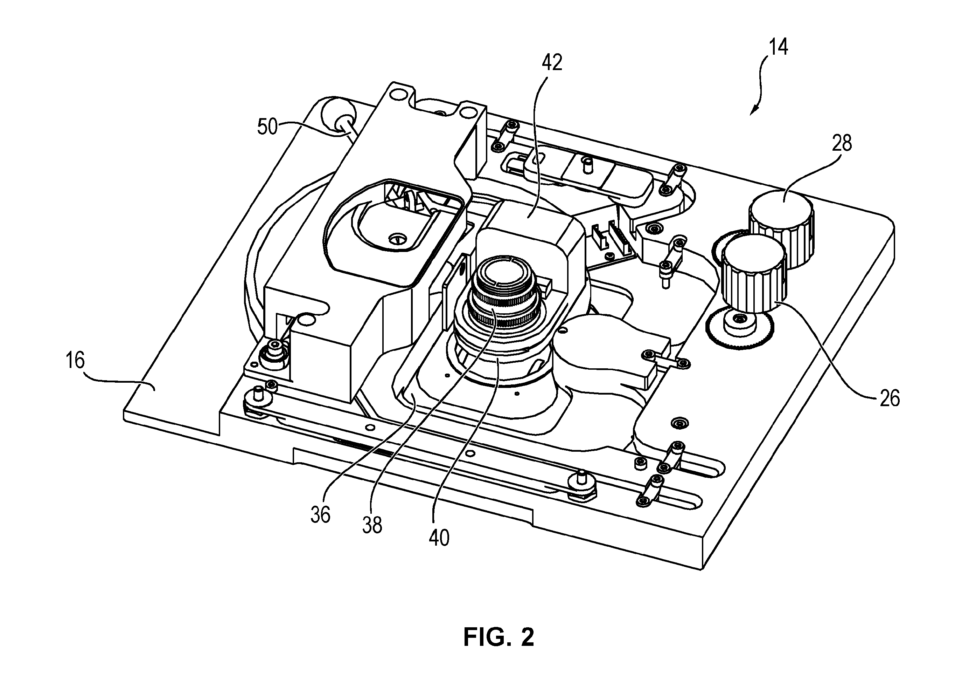

Im Folgenden wird zunächst der Gesamtaufbau eines hochauflösenden Lichtmikroskops 10 unter Bezugnahme auf die Figuren 1 und 2 erläutert. Dabei werden nur diejenigen Komponenten des Lichtmikroskops 10 beschrieben, die für das Verständnis der vorliegenden Erfindung benötigt werden.

Das Lichtmikroskop 10 weist ein Mikroskopstativ 12 auf, an das ein Mikroskoptisch 14 geschraubt ist. Der Mikroskoptisch 14 hat eine Tischplatte 16, auf der ein Probenträger 18 aufliegt. Auf der Tischplatte 16 befindet sich eine Positioniereinrichtung 20, die aus einem ersten Schieber 22 und einem zweiten Schieber 24 gebildet ist. Die beiden Schieber 22 und 24 sind mechanisch voneinander entkoppelt und dienen dazu, den Probenträger 18 auf der Tischplatte 16 in zwei zueinander senkrechten Richtungen zu verschieben. Hierzu dienen zwei an der Unterseite der Tischplatte gelagerte Handräder 26 und 28, wie in Figur 2 gezeigt ist.

Das Lichtmikroskop 10 weist ferner ein an dem Mikroskopstativ 12 angebrachtes Paar Okulare 30 sowie einen Objektivrevolver 32 auf, der mehrere Mikroskopobjektive 34 hält. In der Darstellung nach Figur 1 ist das Mikroskopstativ 12 aufgebrochen dargestellt, so dass der durch das Mikroskopstativ 12 ansonsten verdeckte Objektivrevolver 32 sichtbar ist.

Wie die Unteransicht nach Figur 2 zeigt, ist an der Unterseite der Tischplatte 16 unterhalb einer in der Tischplatte 16 ausgebildeten Durchgangsöffnung 36 ein Objektiv 38 angeordnet. Das Objektiv 38 ist über ein Objektivgewinde in einen Fokussierantrieb 40 geschraubt. Der Fokussierantrieb 40 ist beispielsweise ein piezokeramischer Aktor, der das Objektiv 38 zur Fokussierung auf die abzubildende Probe längs seiner optischen Achse bewegt. Der Fokussierantrieb 40 ist an einer unterhalb der Tischplatte 16 verschwenkbaren Halterung 42 angebracht.

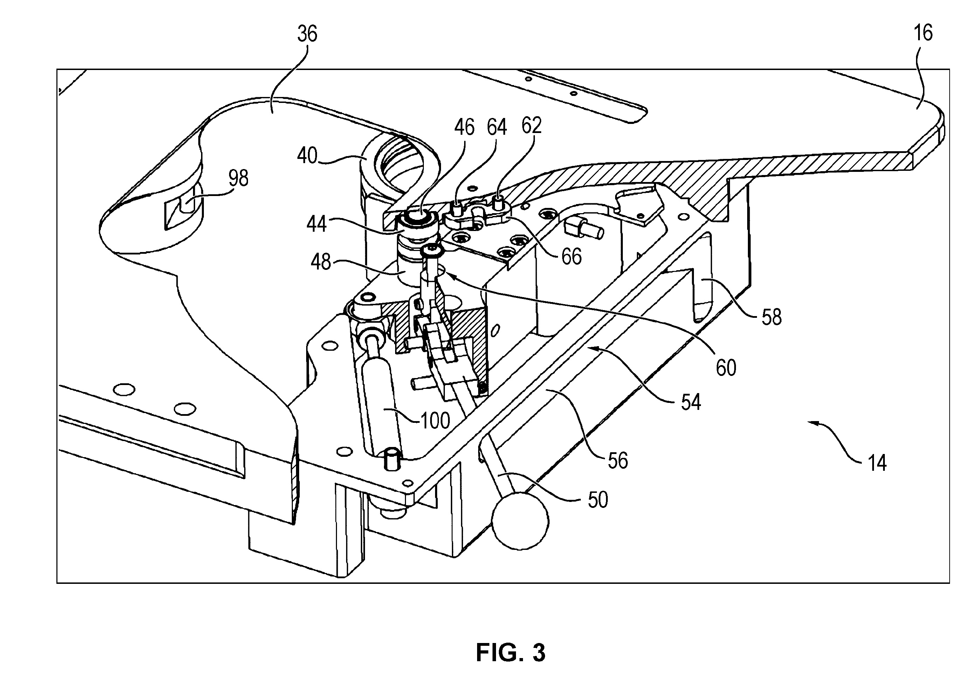

Die Halterung 42 und die mit ihr zusammenwirkenden Komponenten, die dazu dienen, das Objektiv 38 mit dem Fokussierantrieb 40 aus dem Abbildungsstrahlengang heraus- bzw. in diesen einzuschwenken, werden im Folgenden unter Bezugnahme auf die Figuren 3 bis 7 näher erläutert.

In den Figuren 3 bis 7 ist dargestellt, wie die Halterung 42 aus einer Stellung, in der sie aus dem Abbildungsstrahlengang herausgeschwenkt ist, in eine Betriebsstellung, in der sich das über den Fokussierantrieb 40 an der Halterung 42 angebrachte Objektiv 38 in dem Abbildungsstrahlengang befindet, bewegt und schließlich an der Tischplatte 16 festgezogen wird. Zunächst werden unter Bezugnahme auf die Figuren 3 bis 7 die einzelnen Komponenten beschrieben, die das Verschwenken der Halterung 42 ermöglichen. In denen Figuren 3 bis 7 ist die Halterung 42 jeweils mit dem Fokussierantrieb 40, aber dem ohne Objektiv 38 dargestellt.

Die Halterung 42 ist an einem Drehlager 44, das an der Tischplatte 16 angebracht ist, um eine Lagerachse 46, die im wesentlichen parallel zur optsichen Achse des Abbildungsstrahlengangs verläuft, schwenkbar. Die Ebene, in der die Halterung 42 verschwenkt werden kann, liegt parallel zur Tischplatte 16. Die Halterung 42 ist ferner mit einem sogenannten Z-Lager 48 gekoppelt, das auf der Lagerachse 46 unterhalb des Drehlagers 44 angeordnet ist. Das Z- Lager 48 ermöglicht es, die Halterung 42 längs der Lagerachse 46 nach oben und unten zu bewegen.

Die Halterung 42 ist mit einem Schwenkhebel 50 gekoppelt, der dazu dient, die Halterung 42 um die Lagerachse 46 zu schwenken und längs dieser zu verschieben. Der Schwenkhebel 50 ist in einer Hebelführung 54 gehalten, die einen ersten horizontalen Führungsabschnitt 56 und einen zweiten vertikalen Führungsabschnitt 58 aufweist, der an ein Ende des ersten Führungsabschnitts 56 anschließt. Der erste horizontale Führungsabschnitt 56 definiert eine erste horizontale Schwenkebene, in der der Schwenkhebel 50 bewegt werden kann, um die Halterung 42 um die Lagerachse 46 zu verschwenken. Der zweite vertikale Führungsabschnitt 58 definiert eine zweite vertikale Schwenkebene, in der der Schwenkhebel 50 bewegt werden kann, um die Halterung 42 längs der Lagerachse 46 zu verschieben.

Das Verschwenken der Halterung 42 um die Längsachse 46 und/oder das Verschieben längs der Längsachse 46 erfolgt insbesondere rein mechanisch durch die mechanische Koppelung der Halterung 42 mit dem Schwenkhebel 50. Bei einer alternativen Ausführungsform kann das Verschwenken und/oder Verschieben der Halterung 42 auch automatisch oder halbautomatisch erfolgen. Hierzu ist insbesondere mindestens eine Antriebseinheit, vorzugsweise ein Elektromotor, vorgesehen, mit deren Hilfe die Halterung 42 um die Längsachse 46 verschwenkt und/oder längs der Längsachse 46 verschoben werden kann. Die Aktivierung und/oder Steuerung der Antriebseinheit erfolgt insbesondere über die Schwenkhebel 50. Bei einer weiteren alternativen Ausführungsform kann das Verschwenken und/oder das Verschieben auch durch eine Kombination einer mechanischen Kopplung mit dem Schwenkhebel 50 und einer Antriebseinheit erfolgen.

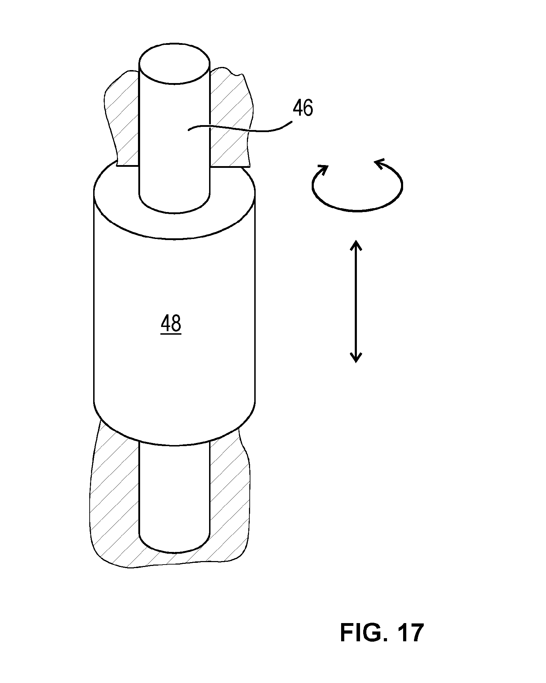

Bei einer alternativen Ausführungsform der Erfindung kann die Längsachse 46, anders als zuvor beschrieben, auch nicht über ein Drehlager 44 drehbar mit der Tischplatte 16 verbunden, sondern orts- und drehfest an der Tischplatte 16 gelagert sein. Bei dieser Ausführungsform ist das Z-Lager 48 derart ausgebildet, dass es um die Längsachse 46 gedreht und längs der Längsachse 46 verschoben werden kann. Die Halterung 42 ist mit dem Z-Lager 48 verbunden, so dass die Halterung 42 um die Längsachse 46 verschwekbar und längs der Längsachse 46 verschiebbar ist. In Figur 17 ist die zuvor beschriebene Lagerung schematisch dargestellt. Dieses Ausführungsform hat den Vorteil, dass auf ein Drehlager 44 verzichtet werden kann, so dass eine einfacher, kostengünstiger und platzsparender Aufbau erreicht wird.

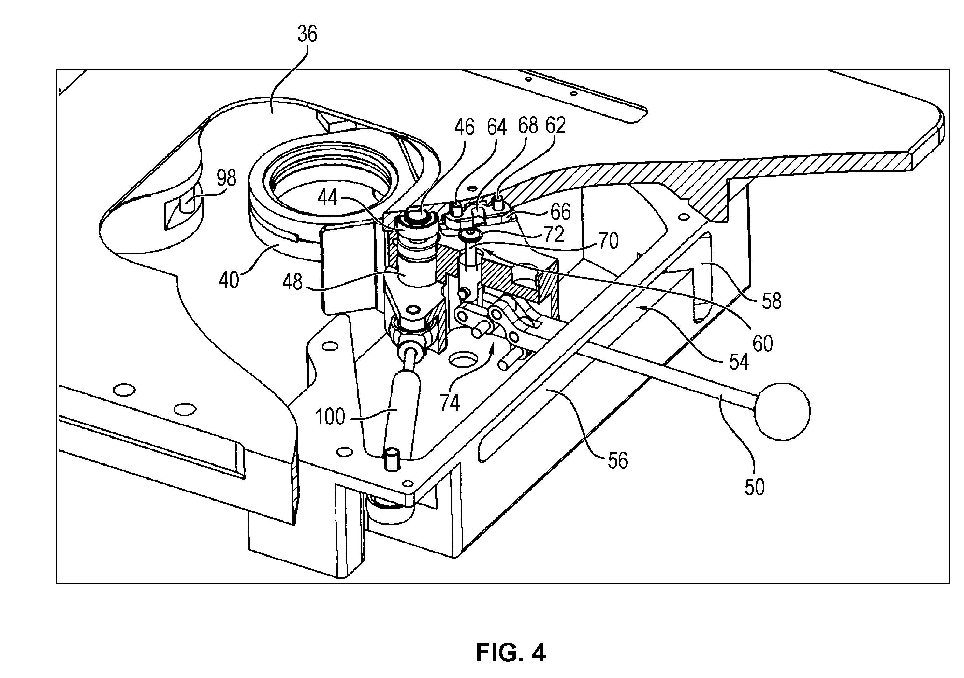

Der erfindungsgemäße Mikroskoptisch 14 weist ferner einen allgemein mit 60 bezeichneten Feststellmechanismus auf, der dazu dient, die Halterung 42 in später erläuterter Weise an der Tischplatte 16 festzusetzen. Der Feststellmechanismus 60 umfasst eine über Stifte 62 und 64 an der Tischplatte 16 angebrachte Klemmplatte 66. Wie am besten in Figur 4 zu erkennen ist, hat die Klemmplatte 66 eine Aussparung 68, die der Aufnahme einer Spannschraube 70 dient. Die Spannschraube 70 hat einen verbreiterten Schraubenkopf 72, der von oben her mit der Klemmplatte 66 in Anlage bringbar ist, wenn die Spannschraube 70 in der Aussparung 68 aufgenommen ist.

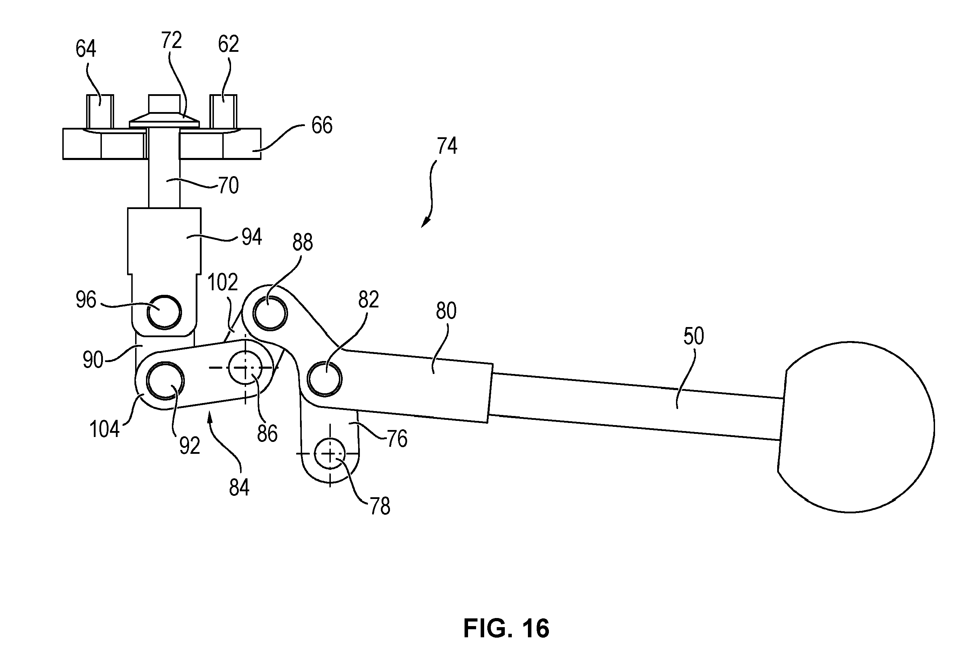

Die Spannschraube 70 bildet ein Verriegelungselement, das durch Betätigen des Schwenkhebels 50 an der Klemmplatte 66 verspannt werden kann, um die Halterung 42 an der Tischplatte 16 zu arretieren. Hierzu ist der Schwenkhebel 50 über eine allgemein mit 74 bezeichnete Gelenkkette mit der Spannschraube 70 gekoppelt. Der Aufbau der Gelenkkette 74 ist am besten in der vergrößerten Darstellung nach Figur 16 zu erkennen..

Die Gelenkkette 74 hat ein erstes Gelenkglied 76, das um eine erste Gelenkachse 78 schwenkbar ist. Die erste Gelenkachse 78 ist fest an der Halterung 42 angebracht. Ein zweites Gelenkglied 80 der Gelenkkette 74 ist fest an einem Ende des Schwenkhebels 50 montiert und über eine zweite Gelenkachse 82 schwenkbar mit dem ersten Gelenkglied 76 gekoppelt. Die Gelenkkette 74 hat ferner ein drittes Gelenkglied 84, das um eine relativ zur Halterung 42 ortsfeste dritte Gelenkachse 86 schwenkbar gelagert ist. Ferner ist das dritte Gelenkglied 84 um eine vierte Gelenkachse 88 schwenkbar mit dem zweiten Gelenkglied 80 gekoppelt. Ein viertes Gelenkglied 90 der Gelenkkette 74 ist um eine fünfte Gelenkachse 92 schwenkbar mit dem dritten Gelenkglied 84 gekoppelt. Schließlich hat die Gelenkkette 74 ein fünftes Gelenkglied 94, das um eine sechste Gelenkachse 96 schwenkbar mit dem vierten Gelenkglied 84 gekoppelt ist. Das fünfte Gelenkglied 94 ist eine Gewindehülse, in welche die Spannschraube 70 geschraubt ist.

Der Mikroskoptisch 14 hat ferner einen Schwenkanschlag 98, der die Begrenzung für die Schwenkbewegung der Halterung 42 um die Lagerachse 46 bildet. Den Anschlag für die nach oben gerichtete Verschiebung der Halterung 42 längs der Schwenkachse 46 bildet die Unterseite der Tischplatte 16 selbst.

Eine z.B. als Gasdruckfeder ausgeführte Druckfeder 100 ist mit einem Ende drehbar an der Halterung 42 und mit ihrem anderen Ende drehbar an einem feststehenden Teil des Mikroskoptisches 14 gelagert. Durch diese Anordnung ist gewährleistet, dass die Druckfeder 100 auf den Schwenkhebel 50 Vorspannkräfte ausübt, die den Schwenkhebel 50 in Richtung seiner Hebelendpositionen vorspannen, die durch die beiden Enden des ersten Horizontalführungsabschnittes 56 der Hebelführung 54 gegeben sind.

Wird nämlich der Schwenkhebel 50 aus einer der beiden Hebelendpositionen etwa bis zur Mitte des durch den ersten horizontalen Führungsabschnittes 56 der Hebelführung 54 festgelegten Schwenkbereichs bewegt, so wird die Druckfeder 100 entgegen ihrer Federkraft zusammengedrückt. Dies bewirkt eine Vorspannung zu der Hebelendposition hin, aus der der Schwenkhebel 50 gerade herausbewegt wird. Wird anschließend der Schwenkhebel 50 über die Mitte des vorstehend genannten Schwenkbereichs hinweg in Richtung der anderen Hebelendposition bewegt, so entspannt sich die Druckfeder 100 in Folge ihrer Federkraft, wodurch sie den Schwenkhebel 50 in diejenige Hebelendposition vorspannt, in die die Schwenkbewegung des Schwenkhebels 50 gerichtet ist.

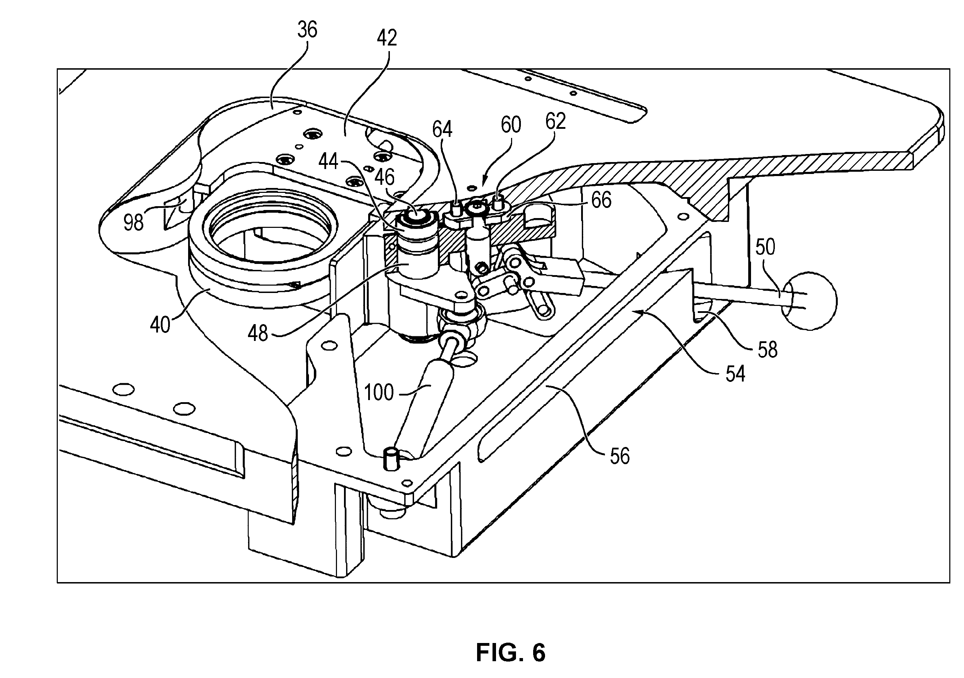

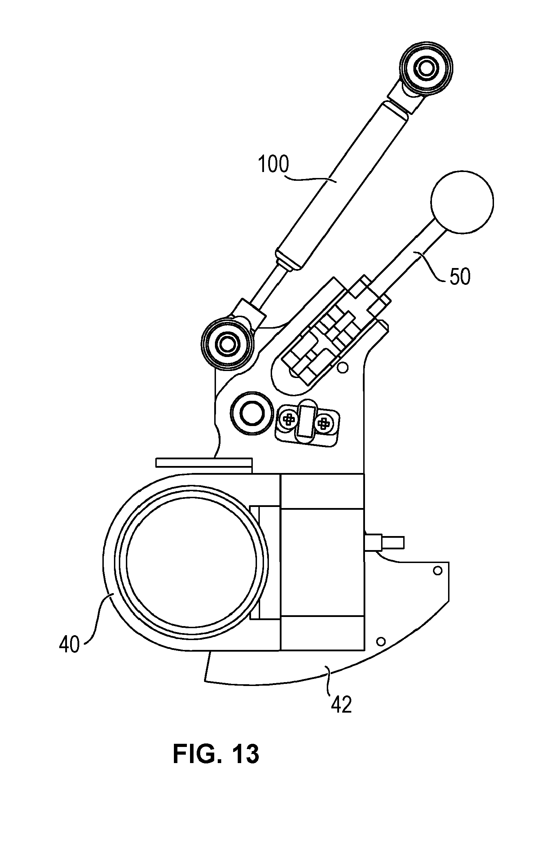

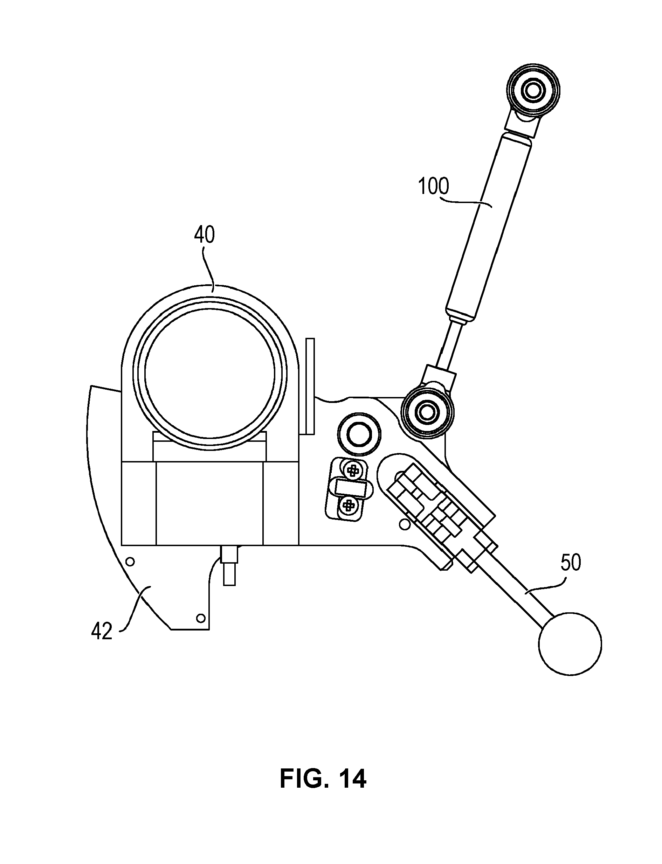

Die Anordnung der Druckfeder 100 relativ zu dem Schwenkhebel 50 ist für die beiden vorstehend genannten Hebelendpositionen in den Unteransichten nach den Figuren 13 und 14 veranschaulicht. Dabei entspricht die in Figur 13 gezeigte Anordnung dem Schwenkzustand nach Figur 3 und die in Figur 14 gezeigte Anordnung dem Schwenkzustand nach Figur 6.

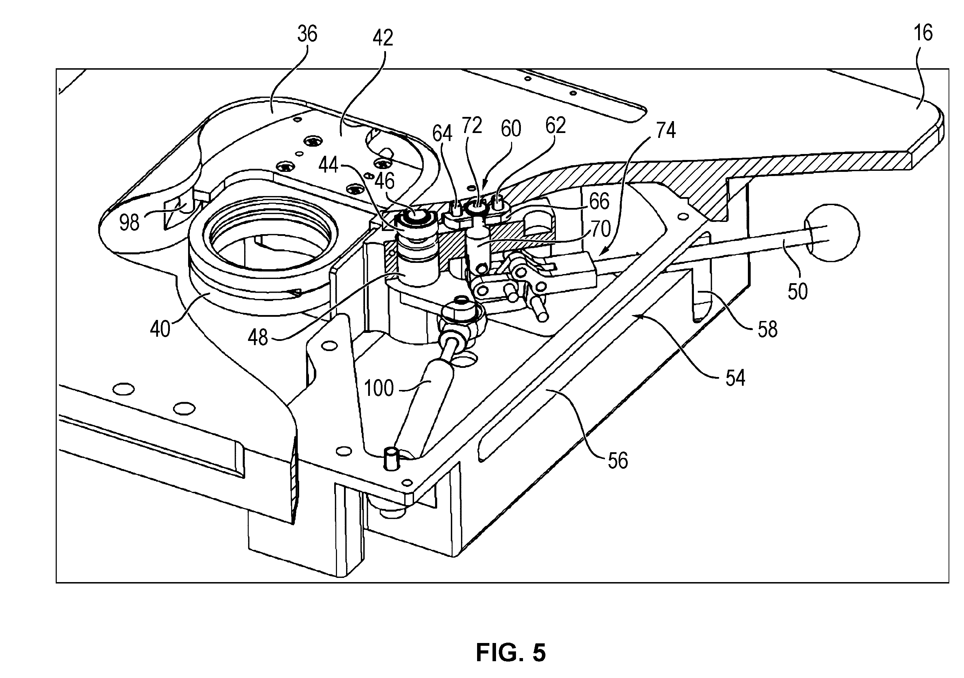

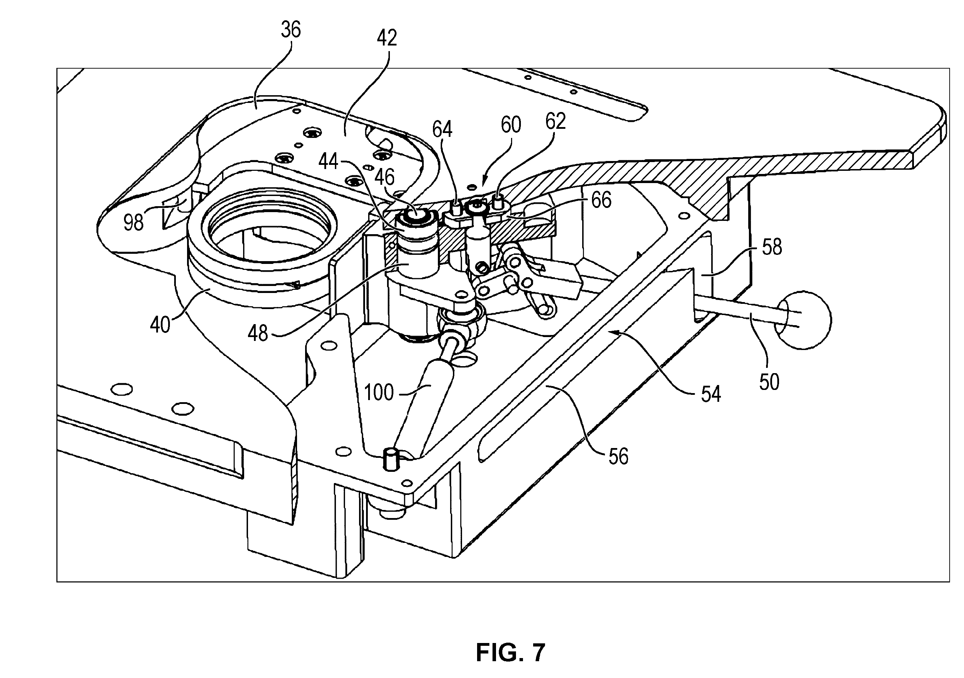

Die Figuren 3 bis 7 zeigen wie die Halterung 42 mitsamt dem Objektiv 38, das über den Fokussierantrieb 40 fest mit der Halterung 42 gekoppelt ist, aus einer Stellung, in der die Halterung 42 aus dem Abbildungsstrahlengang herausgeschwenkt ist (Figur 3) zunächst in ihre Betriebsstellung, in der die Halterung 42 an dem Schwenkanschlag 98 und der ebenfalls einen Anschlag bildenden Unterseite der Tischplatte 16 anliegt (Figur 6), bewegt und schließlich in dieser Betriebsstellung an der Unterseite der Tischplatte 16 festgesetzt wird (Figur 7). Durch die Bewegung des Schwenkhebels 50 aus seiner in Figur 3 gezeigten Hebelendposition in seine in Figur 5 gezeigte Hebelendposition wird die Spannschraube 70 in die Aussparung 68 der Klemmplatte 66 bewegt. Anschließend wird der Schwenkhebel 50 innerhalb des vertikalen zweiten Führungsabschnittes 58 der Hebelführung 54, wie in Figur 6 gezeigt, soweit nach unten gedrückt, bis die Oberseite der Halterung 42 in Anlage mit der Unterseite der Tischplatte 16 kommt. Damit ist die Betriebsstellung der Halterung 42 erreicht.

Wie in Figur 7 gezeigt, wird anschließend der Schwenkhebel 50 weiter nach unten gedrückt, wodurch in später beschriebener Weise die Spannschraube 70 nach unten gezogen wird, bis der Schraubenkopf 72 von oben in Anlage mit der Oberseite der Klemmplatte 66 kommt. Dadurch wird die Halterung 42 an der Unterseite der Tischplatte 16 festgezogen.

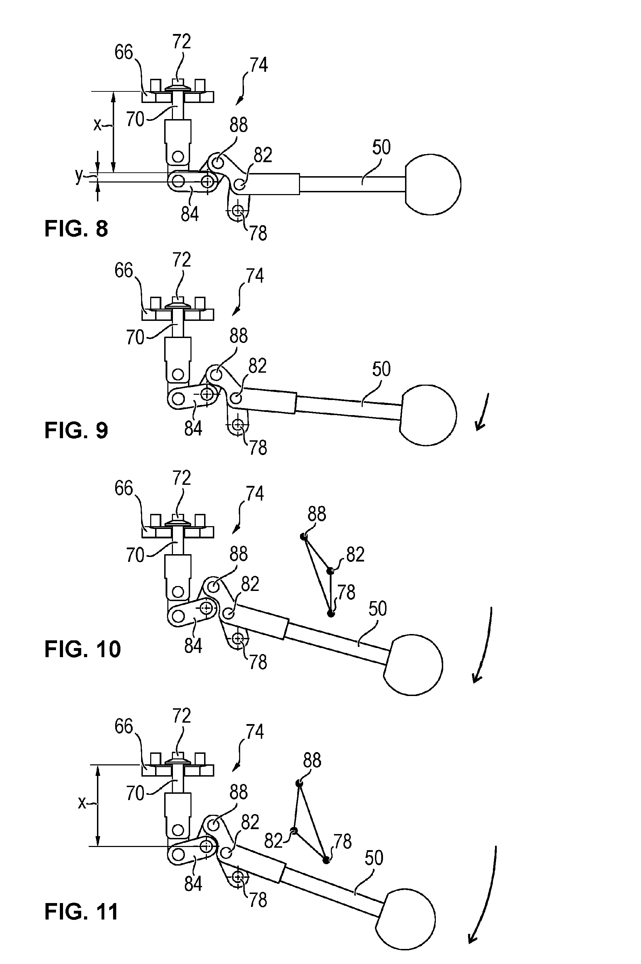

Das vorstehend unter Bezugnahme auf die Figuren 5 bis 7 beschriebene Herunterdrücken des Schwenkhebels 50 innerhalb des vertikalen zweiten Führungsabschnittes 58 der Hebelführung 54 ist im Hinblick auf die Funktionsweise der Gelenkkette 74, die den Schwenkhebel 50 mit der Spannschraube 70 verbindet, nochmals in den Figuren 8 bis 11 dargestellt. Dabei entspricht die Darstellung nach Figur 8 dem in Figur 5 gezeigten Zustand und die Darstellung nach Figur 11 dem in Figur 7 gezeigten Zustand, während die Figuren 9 und 10 Zwischenzustände darstellen.

Für das Verständnis der Funktionsweise der Gelenkkette 74 ist zunächst bedeutsam, dass die erste Gelenkachse 78 und die dritte Gelenkachse 86 bezüglich der Halterung 42 ortsfeste Achsen darstellen, während sich die zweite Gelenkachse 82, die vierte Gelenkachse 88, die fünfte Gelenkachse 92 und die sechste Gelenkachse 96 durch das Bewegen des Schwenkhebels 50 relativ zur Halterung 42 bewegen. Hierzu ist festzustellen, dass die Bewegungen der fünften Gelenkachse 92 und der sechsten Gelenkachse 96 nur so geringfügig ist, dass sie in den Figuren 8 bis 11 nicht zu erkennen sind.

In der Gelenkkette 74 bildet das dritte Gelenkglied 84 ein bistabiles Glied, das ausgelöst durch die Betätigung des Schwenkhebels 50 gleichsam zwischen zwei stabilen Lagen umgeschaltet wird. Dieser Wechsel des bistabilen dritten Gelenkgliedes 84 wird dadurch ausgelöst, dass die Halterung 42 durch das nach unten Schwenken des Schwenkhebels 50 mit der Unterseite der Tischplatte 16 in Anlage kommt. Dies entspricht dem Übergang aus dem in Figur 10 gezeigten Zustand in den in Figur 11 gezeigten Zustand.

In den Figuren 10 und 11 ist der Lagewechsel des bistabilen dritten Gelenkgliedes 84 jeweils durch die abstrahiert hervorgehobene Lage der drei Gelenkachsen 78, 82 und 88 in Form eines Achsdreiecks veranschaulicht. In dem in Figur 10 gezeigten Zustand ist die Gelenkachse 82 rechts von der die beiden Gelenkachsen 78 und 88 verbindenden Linie angeordnet (wobei diese Achslagen in der abstrahierten Dreiecksdarstellung zur Veranschaulichung übertrieben sind). Wird der Schwenkhebel 50 ausgehend von dem in Figur 10 gezeigten Zustand weiter nach unten gedrückt, so schnappt gleichsam die Gelenkachse 82 von der rechten auf die linke Seite der die beiden Gelenkachsen 78 und 88 verbindenden Linien (wiederum übertrieben dargestellt).

In dem in Figur 10 gezeigten Zustand weist der Schraubkopf 72 der Spannschraube 70 noch ein gewisses Spiel gegenüber der Oberseite der Klemmplatte 66 auf, d.h. er ist noch nicht an der Klemmplatte 66 festgezogen. Schaltet das bistabile dritte Gelenkglied 84 aus dem Zustand nach Figur 10 in den Zustand nach Figur 11 um, so wird dadurch die Spannschraube 70 nach unten gezogen, wodurch der Schraubkopf 72 der Spannschraube 70 an der Oberseite der Klemmplatte 66 festgezogen wird.

Das bistabile dritte Gelenkglied 86 bildet in der Gelenkkette 74 gleichsam eine Wippe, die zwei fest und winkelig zueinander angeordnete Gelenkteile 102 und 104 aufweist, wie am besten in Figur 16 zu sehen ist. Die beiden Gelenkteile 102 und 104 sind gemeinsam um die ortsfeste dritte Gelenkachse 86 gelagert. Der Gelenkteil 102 ist ferner über die vierte Gelenkachse 88 mit dem zweiten Gelenkglied 80 gekoppelt, während der Gelenkteil 104 über die fünfte Gelenkachse 92 mit dem vierten Gelenkglied 90 gekoppelt ist.

Die vorstehend erläuterte Ausbildung der Gelenkkette 74 sorgt dafür, dass der Benutzer beim Schwenken des Schwenkhebels 10 aus dem in Figur 10 gezeigten Zustand in den in Figur 11 gezeigten Zustand einen erhöhten Betätigungswiderstand wahrnimmt, der dann bei Erreichen des in Figur 11 gezeigten Zustands wieder abnimmt. Der Betätigungshebel 50 schnappt an dem Übergang zwischen den beiden vorstehend genannten Zuständen gleichsam nach unten. Dadurch kann der Benutzer erkennen, wann die Halterung 42 an der Unterseite der Tischplatte 16 festgezogen ist.

In Figur 1, die den festgezogenen Zustand zeigt, ist der vertikale Klemmabstand, den die relativ zur Halterung 42 ortsfeste dritte Gelenkachse 86 gegenüber der Oberseite der Klemmplatte 66 aufweist, mit x bezeichnet. Dagegen ist der Abstand der dritten Gelenkachse 86 gegenüber der Oberseite der Klemmplatte 66 in dem in Figur 8 gezeigten Zustand, in dem die Spannschraube 70 noch nicht an der Klemmplatte 66 festgezogen ist, um einen zusätzlichen vertikale Strecke y vergrößert. Dieser zusätzliche Stecke y entspricht der Hubhöhe, mit der die Halterung 42 aus dem in Figur 5 (entsprechend Figur 8) gezeigten Zustand in den in Figur 7 (entsprechend Figur 11) dargestellten Zustand zur Unterseite der Tischplatte 16 hin nach oben gezogen wird.

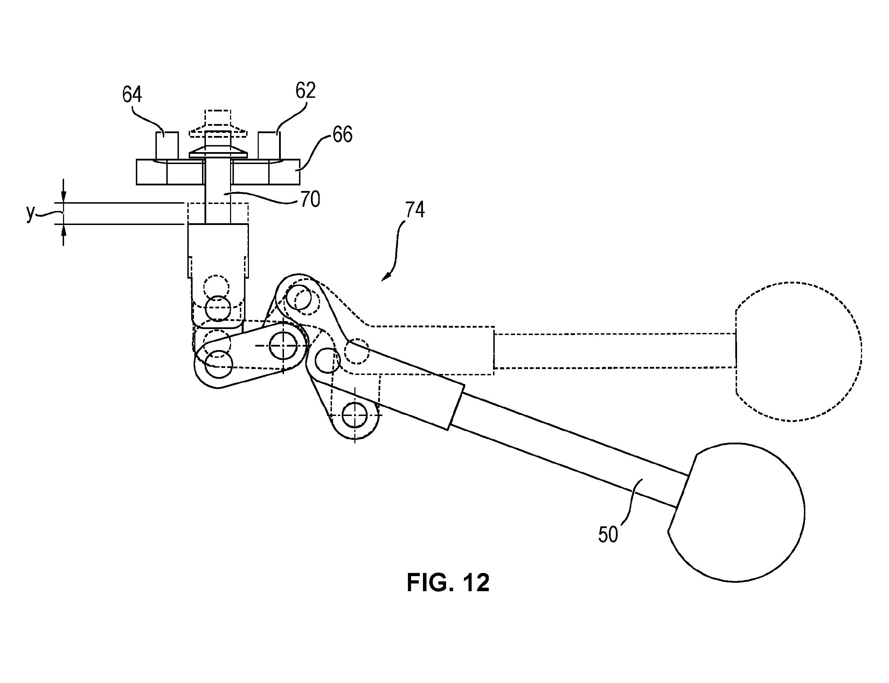

In Figur 12 sind die in den Figuren 8 und 11 gezeigten Zustände nochmals einander überlagert dargestellt. Dabei ist die in Figur 8 gezeigte Hubhöhe y, um welche die Spannschraube 70 angezogen wird, übertrieben groß dargestellt.

Die Hubhöhe y kann dadurch verändert werden, dass die Einschraubtiefe, mit der die Spannschraube 70 in das als Gewindehülse ausgebildete fünfte Gelenkglied 96 geschraubt ist, variiert wird. Dadurch kann die Befestigungskraft, mit der die Halterung 42 an der Tischplatte 16 festgezogen wird, nach Bedarf eingestellt werden.

### Bezugszeichenliste

- 10: Lichtmikroskop
- 12: Mikro skop stativ
- 14: Mikroskoptisch
- 16: Tischplatte
- 18: Probenträger
- 20: Positioniereinrichtung
- 22, 24: Schieber
- 26, 28: Handräder
- 30: Okulare
- 32: Objektivrevolver
- 34: Mikroskopobjektive
- 36: Durchgangsöffnung
- 38: Objektiv
- 40: Fokussierantrieb
- 42: Halterung
- 44: Drehlager
- 46: Lagerachse
- 48: Z-Lager
- 50: Schwenkhebel
- 54: Hebelführung
- 56: horizontaler Führungsabschnitt
- 58: vertikaler Führungsabschnitt
- 60: Feststellmechanismus
- 62, 64: Stifte
- 66: Klemmplatte
- 68: Aussparung

- 70: Spannschraube
- 72: Schraubenkopf
- 74: Gelenkkette
- 76: erstes Gelenkglied
- 78: erste Gelenkachse
- 80: zweites Gelenkglied
- 82: zweite Gelenkachse
- 84: drittes Gelenkglied
- 86: dritte Gelenkachse
- 88: vierte Gelenkachse
- 90: viertes Gelenkglied
- 92: fünfte Gelenkachse
- 94: fünftes Gelenkglied
- 96: sechste Gelenkachse
- 98: Schwenkanschlag
- 100: Druckfeder
- 102, 104: Gelenkteile

## Patentansprüche

1. Mikroskoptisch (14) mit
einer Tischplatte (16) und einer Halterung (42) für ein Objektiv (38)
**dadurch gekennzeichnet, dass** die Halterung (42) an der Tischplatte (16) um eine im wesentlichen parallel zu einer optischen Achse angeordneten Lagerachse (46) schwenkbar und längs der Lagerachse (46) verschiebbar gelagert ist und das Objektiv (38) hält,
ein mit der Halterung (42) gekoppeltes Bedienelement (50), mit dem die Halterung (42) zur Positionierung in eine Betriebsstellung um die Lagerachse (46) verschwenkbar und längs der Lagerachse (46) verschiebbar ist, und
einen durch das Bedienelement (50) betätigbaren Feststellmechanismus (60), mit dem die in der Betriebsstellung positionierte Halterung (42) an der Tischplatte (16) festsetzbar ist.

2. Mikroskoptisch nach Anspruch 1, **dadurch gekennzeichnet, dass** das Bedienelement ein Hebel (50) ist, der zum Verschwenken der Halterung (42) um die Lagerachse (46) in einer ersten Ebene innerhalb eines ersten Schwenkbereichs und zum Verschieben der Halterung (42) längs der Lagerachse (46) in einer zu der ersten Ebene senkrechten zweiten Ebene innerhalb eines zweiten Schwenkbereichs verschwenkbar ist.

3. Mikroskoptisch (14) nach Anspruch 2, **dadurch gekennzeichnet, dass** der Feststellmechanismus (60) eine an der Tischplatte (16) angebrachte Aufnahme (68)und ein mit dem Hebel (50) über eine Gelenkkette (74) gekoppeltes Verriegelungselement (70) aufweist, das durch Verschwenken des Hebels (50) innerhalb des ersten Verschwenkbereichs in die Aufnahme (68) einschwenkbar und zum Festsetzen der Halterung (42) an der Tischplatte (16) durch Verschwenken des Hebels (50) über den zweiten Schwenkbereich hinaus in der Aufnahme festziehbar ist.

4. Mikroskoptisch (14) nach Anspruch 3, **dadurch gekennzeichnet, dass** die Gelenkkette (74) ein mit dem Verriegelungselement (70) gekoppeltes, bistabiles Gelenkglied (84) aufweist, das in der Gelenkkette (74) aus einer ersten stabilen Lage in eine zweite stabile Lage wechselt, wenn der Hebel (50) aus dem zweiten Schwenkbereich über diesen hinaus verschwenkt wird,
das Verriegelungselement (70) über die Gelenkkette (74) aus der Aufnahme (60) gelöst ist, wenn sich das bistabile Gelenkglied (84) in der ersten stabilen Lage befindet, und
das Verriegelungselement (70) über die Gelenkkette (74) in der Aufnahme (60) festgezogen ist, wenn sich das bistabile Gelenkglied (84) in der zweiten stabilen Lage befindet.

5. Mikroskoptisch (14) nach Anspruch 3 oder 4, **dadurch gekennzeichnet, dass** die Gelenkkette (74) dem Hebel (50) beim Wechsel des bistabilen Gelenkgliedes (84) zwischen der ersten stabilen Lage und der zweiten stabilen Lage einen einer erhöhten Betätigungswiderstand entgegensetzt.

6. Mikroskoptisch (14) nach Anspruch 4 oder 5, **dadurch gekennzeichnet, dass** die Gelenkkette (74) umfasst:
ein erstes Gelenkglied (76), das um eine relativ zur Halterung (42) ortsfeste erste Gelenkachse (78) schwenkbar ist,
ein zweites Gelenkglied (80), das fest an dem Hebel (50) angebracht und
über eine zweite Gelenkachse (82) schwenkbar mit dem ersten Gelenkglied (76) gekoppelt ist,
ein das bistabile Gelenkglied (84) bildendes drittes Gelenkglied, das um eine relativ zur Halterung (42) ortsfeste dritte Gelenkachse (86) schwenkbar gelagert und um eine vierte Gelenkachse (88) schwenkbar mit dem zweiten Gelenkglied (80) gekoppelt ist,
ein viertes Gelenkglied (90), das um eine fünfte Gelenkachse (92) schwenkbar mit dem bistabilen Gelenkglied (84) gekoppelt ist, und
ein fünftes Gelenkglied (94), das um eine sechste Gelenkachse (96) schwenkbar mit dem vierten Gelenkglied (96) gekoppelt und mit dem Verriegelungselement (70) verbunden ist.

7. Mikroskoptisch (14) nach Anspruch 6, **dadurch gekennzeichnet, dass** das bistabile Gelenkglied (84) eine Wippe mit zwei fest und winkelig zueinander angerordneten Gelenkteilen (102, 104) ist, die gemeinsam um die relativ zur Halterung (42) ortsfeste dritte Gelenkachse (86) gelagert sind und von denen ein Gelenkteil (102) über die vierte Gelenkachse (88) mit dem zweiten Gelenkglied (80) und der andere Gelenkteil (104) über die fünfte Gelenkachse (92) mit dem vierten Gelenkglied (90) gekoppelt ist.

8. Mikroskoptisch (14) nach einem der Ansprüche 3 bis 7, **dadurch gekennzeichnet, dass** das Verriegelungselement ein Stift (70) mit einem aufgeweiteten Stiftkopf (72) ist,
die Aufnahme (60) eine in die Tischplatte (16) integrierte Klemmplatte (66) ist, die eine Anlagefläche für den Stiftkopf (72) und eine zu einer Seite hin offene Aussparung (68) aufweist, in die der Stift (70) einschwenkbar ist, und
der Stiftkopf (72) zum Festsetzen der Halterung (42) an der Tischplatte (16) an der Anlagefläche festziehbar ist.

9. Mikroskoptisch (14) nach Anspruch 8, **dadurch gekennzeichnet, dass** der Stift als Schraube (70) und das fünfte Gelenkglied als Gewindehülse (94) ausgebildet ist, in welche die Schraube (70) eingeschraubt ist.

10. Mikroskoptisch (14) nach Anspruch 9, **dadurch gekennzeichnet, dass** die Kraft, mit der die Halterung (42) an der Tischplatte (16) festziehbar ist, durch Verändern der Einschraubtiefe, mit der die Schraube (70) in die Gewindehülse (94) geschraubt ist, einstellbar ist.

11. Mikroskoptisch (14) nach einem der Ansprüche 2 bis 10, **dadurch gekennzeichnet, dass** die Halterung (42) in ihrer Betriebsstellung an einem ersten Anschlag (98), der die Schwenkbewegung der Halterung (42) um die Lagerachse (46) begrenzt, und an einem zweiten Anschlag anliegt, der die Verschiebebewegung der Halterung (42) längs der Lagerachse (46) begrenzt.

12. Mikroskoptisch (14) nach Anspruch 11, **dadurch gekennzeichnet** der zweite Anschlag durch die Tischplatte (16) gebildet ist, an der die Halterung (42) in ihrer Betriebsstellung anliegt.

13. Mikroskoptisch (14) nach einem der Ansprüche 2 bis 12, **gekennzeichnet durch** eine Hebelführung (54) mit einem in der ersten Ebene liegenden ersten Führungsabschnitt (56) und einem an die den ersten Führungsabschnitt (56) anschließenden, in der zweiten Ebene liegenden zweiten Führungsabschnitt (58).

14. Mikroskoptisch (14) nach einem der Ansprüche 2 bis 13, **gekennzeichnet durch** eine im Wesentlichen parallel zu der ersten Ebene angeordnete Druckfeder (100), deren eines Ende drehbar an der Halterung (42) und deren anderes Ende drehbar an einem feststehenden Teil des Mikroskoptisches (14)
gelagert ist, wobei die Druckfeder (100) beim Verschwenken des Hebels (50) aus einer Hebelendposition in die andere Hebelendposition des ersten Schwenkbereichs zunächst entgegen ihrer Federkraft zusammengedrückt wird und sich dann etwa in der Mitte des ersten Schwenkbereichs infolge ihrer Federkraft entspannt, wodurch der Hebel (50) in Richtung seiner beiden Hebelendpositionen vorgespannt ist.

15. Mikroskoptisch (14) nach einem der vorhergehenden Ansprüche,
**dadurch gekennzeichnet, dass** das Objektiv (38) in einer in der Tischplatte (16) ausgebildeten Durchgangsöffnung (36) angeordnet ist, wenn sich die Halterung (42) in ihrer Betriebsstellung befindet

16. Mikroskop (10) mit einem Mikroskoptisch (14) nach einem der vorhergehenden Ansprüche und einem Objektivrevolver (32) zum wahlweisen Einschwenken eines von mehreren an dem Objektivrevolver (32) gehaltenen Mikroskopobjektiven (34).

17. Mikroskop (10 nach Anspruch 16, **dadurch gekennzeichnet, dass** es als konfokales Scanmikroskop ausgebildet ist und für hochauflösende Lokalisierungsmikroskopie verwendet wird.
